(19) Europäisches Patentamt

European Patent Office

Office européen des brevets

(11) **EP 1 919 838 B1**

(12) **FASCICULE DE BREVET EUROPEEN**

(45) Date de publication et mention
de la délivrance du brevet:
**21.09.2011 Bulletin 2011/38**

(21) Numéro de dépôt: **06820249.8**

(22) Date de dépôt: **18.07.2006**

(51) Int Cl.:
**C03C 17/34** *(2006.01)*

(86) Numéro de dépôt international:
**PCT/FR2006/050727**

(87) Numéro de publication internationale:
**WO 2007/028913 (15.03.2007 Gazette 2007/11)**

(54) **VITRAGE MUNI D'UN EMPILEMENT DE COUCHES MINCES AGISSANT SUR LE RAYONNEMENT SOLAIRE**

VERGLASUNG MIT DÜNNSCHICHTSTAPEL MIT EINWIRKUNG AUF SONNENLICHT

GLAZING PROVIDED WITH A STACK OF THIN FILMS ACTING ON THE SUNLIGHT

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **29.07.2005 FR 0552387**

(43) Date de publication de la demande:
**14.05.2008 Bulletin 2008/20**

(73) Titulaire: **SAINT-GOBAIN GLASS FRANCE
92400 Courbevoie (FR)**

(72) Inventeur: **BELLIOT, Sylvain
F-75012 Paris (FR)**

(74) Mandataire: **Colombier, Christian
Saint-Gobain Recherche
39, quai Lucien Lefranc
93300 Aubervilliers (FR)**

(56) Documents cités:
EP-A- 0 530 676          EP-A1- 1 148 037
EP-A1- 1 148 037         EP-A1- 1 300 374
EP-A1- 1 300 374         WO-A-2005/000578
WO-A1-02/24971           WO-A1-02/24971
FR-A1- 2 799 005         FR-A1- 2 799 005
FR-A1- 2 841 894         FR-A1- 2 841 894
FR-A1- 2 857 885         FR-A1- 2 857 885
US-A- 5 073 451          US-A- 5 216 542
US-A1- 2004 214 013      US-A1- 2004 214 013

- **PATENT ABSTRACTS OF JAPAN vol. 018, no. 093
  (C-1166), 16 février 1994 (1994-02-16) -& JP 05
  294674 A (CENTRAL GLASS CO LTD), 9
  novembre 1993 (1993-11-09)**
- **PATENT ABSTRACTS OF JAPAN vol. 1998, no.
  01, 30 janvier 1998 (1998-01-30) -& JP 09 255371
  A (CENTRAL GLASS CO LTD), 30 septembre 1997
  (1997-09-30)**
- **PATENT ABSTRACTS OF JAPAN vol. 1997, no.
  03, 31 mars 1997 (1997-03-31) -& JP 08 295539 A
  (CENTRAL GLASS CO LTD), 12 novembre 1996
  (1996-11-12)**

Remarques:
Le dossier contient des informations techniques
présentées postérieurement au dépôt de la demande
et ne figurant pas dans le présent fascicule.

EP 1 919 838 B1

**Description**

L'invention concerne les vitrages munis d'empilements de couches minces agissant sur le rayonnement solaire, notamment ceux destinés à l'isolation thermique et/ou la protection solaire.

Ce type de vitrage est plus particulièrement adapté pour équiper des bâtiments : en agissant, grâce aux couches minces, sur la quantité d'énergie du rayonnement solaire, il permet d'éviter à l'intérieur des locaux un échauffement excessif en été et contribue ainsi à limiter la consommation d'énergie nécessaire à leur climatisation.

L'invention concerne également ce type de vitrage une fois opacifié de façon à faire partie d'un panneau de parement de façade, appelé de façon plus concise allège, et qui permet, en association avec des vitrages pour la vision, d'offrir des surfaces extérieures de bâtiments entièrement vitrées.

Ces vitrages (et allèges) à couches sont soumis à un certain nombre de contraintes : en ce qui concerne les vitrages, les couches employées doivent être suffisamment filtrantes vis-à-vis du rayonnement solaire. En outre, ces performances thermiques doivent préserver l'aspect optique, l'esthétisme du vitrage : il est souhaitable de pouvoir moduler le niveau de transmission lumineuse du substrat, et de garder une couleur esthétique, tout particulièrement en réflexion extérieure. Cela est aussi vrai des allèges en ce qui concerne l'aspect en réflexion. Ces couches doivent aussi être suffisamment durables, et cela d'autant plus si, dans le vitrage une fois monté, elles sont sur l'une des faces extérieures du vitrage (par opposition aux faces "intérieures", tournées vers la lame de gaz intercalaire d'un double vitrage par exemple).

Une autre contrainte s'impose progressivement : quand les vitrages sont constitués au moins en partie de substrats verriers, ceux-ci peuvent avoir à subir un ou plusieurs traitements thermiques, par exemple un bombage si on veut leur conférer un galbe (vitrine), une trempe ou un recuit si on veut qu'ils soient plus résistants/moins dangereux en cas de chocs. Le fait que des couches soient déposées sur le verre avant son traitement thermique risque d'entraîner leur détérioration et une modification sensible de leurs propriétés notamment optiques (déposer les couches après le traitement thermique du verre est complexe et coûteux).

Une première approche consiste à prévoir la modification d'aspect optique du verre due aux couches après le traitement thermique, et à configurer les couches pour qu'elles ne présentent les propriétés voulues, notamment optiques et thermiques, qu'après ce traitement. Mais de fait, cela contraint à fabriquer en parallèle deux types d'empilements de couches, l'un pour les vitrages non trempés/non bombés et les autres pour les vitrages qui vont être trempés/bombés. On cherche désormais à éviter cela, en concevant des empilements de couches minces (interférentielles) qui puissent être aptes à supporter des traitements thermiques sans modifier trop significativement les propriétés optiques du verre et sans dégradation de son aspect (défaut optique). On peut parler alors de couches "bombables" ou "trempables".

Un exemple de vitrage anti-solaire pour le bâtiment est donné par les brevets EP-0 511 901 et EP-0 678 483 : il s'agit de couches fonctionnelles sur le plan de la filtration des rayonnements solaires qui sont en alliage nickel-chrome, éventuellement nitruré, en acier inox ou en tantale, et qui sont disposées entre deux couches de diélectrique en oxyde métallique comme $SnO_2$, $TiO_2$ ou $Ta_2O_5$. Ces vitrages sont de bons vitrages anti-solaires, présentant des durabilités mécanique et chimique satisfaisantes, mais ne sont pas véritablement "bombables" ou "trempables", car les couches d'oxyde entourant la couche fonctionnelle ne peuvent empêcher son oxydation lors du bombage ou de la trempe, oxydation s'accompagnant d'une modification de la transmission lumineuse, et de l'aspect en général du vitrage dans son ensemble.

Beaucoup d'études ont été réalisées récemment pour rendre les couches bombables/trempables dans le domaine des vitrages bas-émissifs, visant plutôt de hautes transmissions lumineuses contrairement aux anti-solaires. Il a déjà été proposé d'utiliser au-dessus de couches fonctionnelles en argent des couches en diélectrique à base de nitrure de silicium, ce matériau étant relativement inerte vis-à-vis de l'oxydation à haute température et s'avérant apte à préserver la couche d'argent sous-jacente, comme cela est décrit dans le brevet EP-0 718 250.

D'autres empilements de couches agissant sur le rayonnement solaire présumés bombables/trempables ont été décrits, ayant recours à des couches fonctionnelles autres que l'argent : le brevet EP-0 536 607 utilise des couches fonctionnelles en nitrure métallique, du type TiN ou CrN, avec des couches de protection en métal ou en dérivés de silicium, le brevet EP-0 747 329 décrit des couches fonctionnelles en alliage au nickel du type NiCr associées avec des couches en nitrure de silicium.

On connaît par ailleurs des structures d'empilement utilisant en tant que couche agissant sur le rayonnement solaire du dioxyde de titane ($TiO_2$), cette couche étant déposée dans l'enceinte du float par une voie pyrolytique à savoir une décomposition par la chaleur de précurseur liquide ou solide de précurseurs à base de titane.

Bien que le produit donne satisfaction du point de vue de ses propriétés de réflexion à l'égard du rayonnement solaire, son mode de fabrication ne répond plus aux exigences réglementaires environnementales. En effet, la technique de dépôt par voie pyrolytique requiert l'utilisation de précurseurs organométalliques dans des solvants de type hydrocarbure, imposant un retraitement des déchets et des rejets gazeux.

En outre, la technique de dépôt par voie pyrolytique nécessite l'emploi de buses disposées dans l'enceinte de traitement et en regard du ruban de verre en circulation afin de pouvoir disperser les précurseurs organométalliques de manière la plus homogène possible en vue de l'obtention d'une couche à propriétés optiques optimales.

Cependant ces empilements à fonction anti-solaire déposées par la voie pyrolytique ont atteint des performances difficilement susceptibles d'amélioration, si on considère la technique de dépôt et les exigences réglementaires.

Le but de l'invention est alors de mettre au point un nouveau type d'empilements de couches minces agissant sur le rayonnement solaire, en vue de fabriquer par une technique de pulvérisation magnétron des vitrages de protection solaire améliorés. L'amélioration visée est notamment l'établissement d'un compromis meilleur entre durabilité, propriétés thermiques, propriétés optiques et aptitude à supporter les traitements thermiques sans dommage quand le substrat porteur de l'empilement est de type verrier.

L'autre but de l'invention est de rendre cet empilement de couches compatible avec l'utilisation du vitrage, une fois opacifié, en tant qu'allège.

L'invention se rapporte à un substrat transparent, en verre, muni d'un empilement de couches minces agissant sur le rayonnement solaire, l'empilement de couches étant déposé par pulvérisation magnétron, comprenant au moins une couche lubrifiante d'indice optique n élevé, cette couche lubrifiante étant associée à au moins une sous-couche, qui est à base de nitrure de silicium. Plus précisement, l'objet de l'invention est un substrat selon les revendications ci-après.

Les couches lubrifiantes de l'invention permettent de moduler dans les gammes voulues détaillées ci-après la valeur de transmission lumineuse du substrat, en ajustant leurs épaisseurs, tout en gardant un effet anti-solaire.

La présence de la sous-couche permet de moduler avec plus de souplesse l'aspect optique conféré par l'empilement de couches à son substrat porteur. En outre, en cas de traitement thermique, elle constitue une barrière supplémentaire, notamment vis-à-vis de l'oxygène et des alcalins du substrat en verre, espèces susceptibles de migrer à la chaleur et de dégrader l'empilement.

De plus, le choix d'une surcouche à base de nitrure de silicium ou d'oxyde de silicium ($Si_3N_4$ et $SiO_2$ en abrégé) s'est aussi révélé très avantageux à plusieurs titres: ce type de matériau s'est avéré capable de protéger à haute température les couches de l'empilement (la couche lubrifiante et la sous-couche) de l'invention, notamment vis-à-vis de l'oxydation, en préservant leur intégrité, ce qui a rendu l'empilement selon l'invention bombable/trempable dans le cas où le substrat porteur de l'empilement est en verre et qu'on veut lui faire subir un tel traitement thermique après dépôt des couches : la modification des propriétés optiques induites par un traitement thermique du type trempe, est faible avec une transmission lumineuse et un aspect en réflexion extérieure suffisamment peu modifiés pour ne pas être significativement perceptibles à l'oeil humain.

Enfin, on a découvert qu'il était également compatible avec un traitement ultérieur d'émaillage, qui intéresse tout particulièrement les allèges. En effet, pour opacifier les vitrages en allèges, on a généralement deux voies possibles : soit on dépose une laque sur le verre, que l'on sèche et durcit avec un traitement thermique modéré, soit on dépose un émail.

L'émail tel qu'on le dépose de façon habituelle est composé d'une poudre contenant une fritte de verre (la matrice vitreuse) et des pigments employés comme colorants (la fritte et les pigments étant à base d'oxydes métalliques), et un médium appelé aussi véhicule permettant l'application de la poudre sur le verre et son adhésion avec celui-ci au moment du dépôt. Pour obtenir le revêtement émaillé final, il faut ensuite le cuire, et il est fréquent que cette opération de cuisson se fasse concomitamment à l'opération de trempe/bombage du verre. On pourra se reporter pour plus de détails sur des compositions d'émail aux brevets FR-2 736 348, WO96/41773, EP-718 248, EP-712 813, EP-636 588. L'émail, revêtement minéral, est durable, adhérent au verre et donc un revêtement opacifiant intéressant. Cependant, quand le vitrage est préalablement muni de couches minces, son utilisation est délicate pour deux raisons :

- d'une part, la cuisson de l'émail signifie devoir soumettre l'empilement de couches à un traitement thermique à haute température, ce qui n'est possible que si ce dernier est capable de ne pas se détériorer optiquement lors de ce traitement,
- d'autre part, l'émail tend à relarguer au cours du temps des substances chimiques qui viennent diffuser dans les couches sous-jacentes et les modifier chimiquement.

Or, utiliser une couche en nitrure ou en oxyde de silicium pour terminer l'empilement de couches minces a été très efficace, à la fois pour rendre l'ensemble de l'empilement apte à supporter les traitements thermiques et pour faire barrière à ces composés chimiques susceptibles de diffuser hors de la couche d'émail.

De fait, l'empilement de couches selon l'invention est émaillable, en ce sens qu'on peut déposer sur la face du substrat non revêtu de l'empilement de couches et le cuire sans en modifier sensiblement l'aspect optique par rapport à un vitrage de vision muni des mêmes couches, en réflexion extérieure. Et c'est justement là l'enjeu des allèges, à savoir offrir une harmonie de couleur, une similarité la plus grande possible en aspect extérieur avec les vitrages, pour pouvoir constituer des façades entièrement vitrées esthétiques.

Par ailleurs, la ou les couches de l'empilement qui sont à base de nitrure contiennent également un métal minoritaire par rapport au silicium, par exemple de l'aluminium, notamment jusqu'à 10% en poids du composé constituant la couche en question. Cela est utile pour accélérer le dépôt de la couche par pulvérisation cathodique assistée par champ magnétique et réactive, où la cible en silicium sans un "dopage" par un métal n'est pas assez conductrice. Le métal peut en outre conférer une meilleure durabilité au nitrure.

En ce qui concerne les épaisseurs des couches décrites plus haut, on choisit une gamme d'épaisseur de 5 à 50 nm pour la couche lubrifiante, notamment entre 5 et 30 nm. Le choix de son épaisseur permet de moduler la transmission lumineuse du substrat dans des gammes utilisées pour les vitrages de protection solaire pour le bâtiment, soit notamment de 50 à 80% ou de 60 à 70%. Bien sûr, le niveau de transmission lumineuse peut être également modifié à l'aide d'autres paramètres, notamment l'épaisseur et la composition du substrat, s'il est en verre clair ou coloré tout particulièrement.

L'épaisseur de la sous-couche est comprise entre 5 et 70, notamment entre 10 et 35 nm. Elle est par exemple de 15, 20 ou 25 nm.

L'épaisseur de la sur-couche est comprise entre 1 et 10 nm, notamment entre 2 et 7 nm.

Quand il s'agit d'une sous-couche unique, du type $Si_3N_4$, elle est par exemple de 5 à 50 nm, notamment d'environ 10 à 30 ou 25 nm.

L'invention a pour objet le substrat muni de l'empilement de couches décrit dans les revendications ci-après, de façon générale, et qui est bombable et/ou trempable et/ou émaillable. On comprend au sens de l'invention par "bombable et/ou trempable", un empilement, qui, déposé sur un substrat, subit une évolution optique limitée, qui peut notamment être quantifiée en se plaçant dans le système de colorimétrie (L*, a*, b*), par une valeur ΔE* inférieure à 3, notamment inférieure à 2.

On définit ΔE* de la façon suivante :

$$\Delta E^* = (\Delta L^{*2} + \Delta a^{*2} + \Delta b^{*2})^{1/2},$$

avec ΔL*, Δa* et Δb* la différence dans les mesures de L*, a* et b* avant et après traitement thermique.

On considère comme "émaillable", la face du substrat dépourvu d'empilement et sur lequel on peut déposer de façon connue une composition d'émail, sans apparition de défauts optiques dans l'empilement (qui est sur l'autre face du substrat) et avec une évolution optique limitée, que l'on peut quantifier comme précédemment. Cela signifie également qu'il présente une durabilité satisfaisante, sans détérioration gênante des couches de l'empilement au contact de l'émail ni au cours de sa cuisson, ni au cours du temps une fois le vitrage monté.

Bien sûr, un empilement de ce type est intéressant quand on utilise des substrats en verre clair ou teinté dans la masse. Cependant, on peut tout aussi bien ne pas chercher à exploiter son caractère bombable/trempable, mais simplement sa durabilité satisfaisante, en utilisant des substrats verriers.

L'invention a pour objet les vitrages "monolithiques" (c'est-à-dire constitués d'un substrat unique) ou les vitrages multiples isolants du type double vitrage. De préférence, qu'il s'agisse de vitrages monolithiques ou de double vitrage, les empilements de couches sont disposés en face 2 (conventionnellement, on numérote les faces des verres/substrats d'un vitrage de l'extérieur vers l'intérieur de l'habitacle/du local qu'il équipe), et procurent un effet de protection contre la rayonnement solaire.

Les vitrages intéressant plus particulièrement l'invention ont une $T_L$ de l'ordre de 50 à 80% ou de 60 à 70%, et un facteur solaire FS voisin de la valeur de $T_L$. Ils ont également préférentiellement une couleur bleue ou verte en réflexion extérieure (du côté du substrat dépourvu de couches), avec notamment dans le système de colorimétrie (L*, a*, b*) des valeurs de a* et b* négatives (avant et après tout traitement thermique éventuel). On a ainsi une teinte agréable et peu intense en réflexion, recherchée dans le bâtiment.

L'invention a également pour objet le substrat à couches au moins partiellement opacifié par un revêtement de type laque ou émail, en vue de faire des allèges, où le revêtement opacifiant est en contact direct avec la face du substrat qui n'est pas revêtue de l'empilement de couches. L'empilement de couches peut donc être parfaitement identique pour le vitrage vision et pour l'allège.

Si l'application plus particulièrement visée par l'invention est le vitrage pour le bâtiment, il est clair que d'autres applications sont envisageables, notamment dans les vitrages de véhicules (mis à part le pare-brise où l'on exige une très haute transmission lumineuse), comme les verres latéraux, le toit-auto, la lunette arrière.

L'invention sera décrite ci-après avec plus de détails à l'aide d'exemples non limitatifs.

Tous les substrats sont en verre clair de 6 mm d'épaisseur de type Planilux commercialisé par la société Saint-Gobain Glass France.

Toutes les couches sont déposées de façon connue par pulvérisation cathodique assistée par champ magnétique : les couches en métal à partir de cible en métal en atmosphère oxydante pour le $TiO_2$, les couches en nitrure de métal ou de silicium à partir de la cible de métal ou de silicium (dopé avec 8% en masse d'aluminium) adéquate dans une atmosphère réactive contenant de l'azote (100% $N_2$ pour le TiN, 40% Ar et 60% $N_2$ pour $Si_3N_4$). Les couches

en Si$_3$N$_4$ contiennent donc un peu d'aluminium.

## EXEMPLE 1

Cet exemple utilise une couche lubrifiante en TiO$_2$ et une sous-couche en Si$_3$N$_4$ selon la séquence suivante :

$$\text{verre / Si}_3\text{N}_4 \text{ (25 nm)/TiO}_2\text{(20 nm)}$$

Après dépôt des couches, le substrat subit le traitement thermique suivant : chauffage à 620°C pendant 10 minutes.

## EXEMPLE 2

Cet exemple utilise la même couche lubrifiante et la même sous-couche qu'à l'exemple 1, avec une sur-couche en SiO$_2$ supplémentaire selon la séquence suivante :

$$\text{verre / Si}_3\text{N}_4 \text{ (20 nm) / TiO}_2\text{(20 nm) / SiO}_2 \text{ (5 nm)}$$

le substrat revêtu subit ensuite le même traitement thermique qu'à l'exemple 1.
Le tableau 1 ci-dessous regroupe pour les exemples 1, 2 les données suivantes :

- transmission optique $T_L$ : transmission lumineuse en % selon l'illuminant $D_{65}$
- réflexion extérieure (c'est-à-dire celle mesurée côté extérieur, quand le verre revêtu est monté en vitrage monolithique dans un local avec l'empilement de couches en face 2 : réflexion extérieur ($R_{LEXT}$) en %, a*($R_{EXT}$), b*($R_{EXT}$) les coordonnées colorimétriques en réflexion extérieure selon le système de colorimétrie (L*, a*, b*)
- réflexion intérieure : la valeur de $R_{LINT}$ en %, et les données colorimétriques a*($R_{INT}$), b*($R_{INT}$),
- transmission énergétique : $T_E$ en %

Toutes ces données sont indiquées deux fois : avant traitement thermique et après traitement thermique. Sont mesurées également en transmission $\Delta E^*(T)$, en réflexion extérieure $\Delta E^*(R_{EXT})$ et en réflexion intérieure $\Delta E^*(R_{INT})$, avec $\Delta E^* = (\Delta L^{*2} + \Delta a^{*2} + \Delta b^{*2})^{1/2}$ pour la transmission,
avec :

$$\Delta a^* = a^* \text{ (après traitement) - } a^* \text{ (avant traitement),}$$

$$\Delta b^* = b^* \text{ (après traitement) - } b^* \text{ (avant traitement)}$$

$$\Delta L^* = L^* \text{ (après traitement) - } L^* \text{ (avant traitement)}$$

**TABLEAU 1**

| EXEMPLE | Traitement thermique | TRANSMISSION | | | REFLEXION EXTERIEURE | | | | REFLEXION INTERIEURE | | | |
|---|---|---|---|---|---|---|---|---|---|---|---|---|
| | | $T_L$ | $A^*_{(REXT)}$ | $b^*_{(REXT)}$ | $R_{LEXT}$ | $L^*$ | $a^*$ | $b^*$ | $R_{LINT}$ | $L^*$ | $a^*_{(RINT)}$ | $b^*_{(RINT)}$ |
| Exemple 1 | Avant | 66.7 | -1.2 | 5.7 | 31.4 | 62.9 | -1.4 | -9.1 | 29.8 | 61.5 | -3.3 | -8.6 |
| | Après | 65.6 | -1 | 6.3 | 32.3 | 63.6 | -1.3 | -9.9 | 30.7 | 62.3 | -3.2 | -9.4 |
| $\Delta E^*$ | | 1.2 | | | 1.2 | | | | 1.2 | | | |
| Exemple 2 | Avant | 68.8 | -0.4 | 4.4 | 29.0 | 60.8 | -2.3 | -7.4 | 30.0 | 61.7 | -1.3 | -7.5 |
| | Après | 67.6 | -0.3 | 5.2 | 30.1 | 61.7 | -2.1 | -8.1 | 31.1 | 62.6 | -1.1 | -8.2 |
| $\Delta E^*$ | | 1.0 | | | 1.2 | | | | 1.2 | | | |

EP 1 919 838 B1

Ce tableau montre que les exemples 1 et 2 selon l'invention offrent un bon compromis ΔE* avant traitement thermique et après thermique (peu de variation) : ils offrent une bonne protection anti-solaire. Ils sont aussi bons sur le plan esthétique, tout particulièrement en réflexion extérieure où les valeurs de a* et b* sont négatives, donnant une couleur peu intense et dans les bleu-vert appréciée pour les vitrages à forte réflexion extérieure.

Ce qui est notable, c'est que tous ces avantages sont conservés après traitement thermique : les valeurs de $T_L$ et $T_E$ sont conservées à 1% près, les données colorimétriques changent très peu, il n'y a aucun basculement d'une teinte vers une autre teinte en réflexion extérieure. Il n'y a aucun défaut optique. La valeur de ΔE*, quantifiant une éventuelle évolution colorimétrique, reste d'au plus 1.2 en transmission, en réflexion intérieure et extérieure : il s'agit bien d'un empilement apte à subir sans dégradation significative un traitement de type bombage ou trempe. Que l'on souhaite un verre trempé, recuit, bombé ou non, l'invention propose un empilement anti-solaire aux propriétés identiques, préservées. Les remarques faites à propos de l'exemple 1 s'appliquent également à l'exemple 2, sauf en ce qui concerne la valeur de ΔE* en transmission qui est sensiblement inférieure à celle correspondante pour la réflexion tant intérieure qu'extérieure.

En conclusion, les vitrages de protection solaire selon l'invention sont très avantageux pour équiper des bâtiments, sans exclure des applications dans l'automobile et tous véhicules : les vitres latérales, arrière, le toit-auto, qui peuvent d'ailleurs présenter des revêtements émaillés. Avec un empilement de couches fixé, notamment selon les valeurs de $T_L$ et $T_E$ que l'on recherche, on peut ainsi, sans avoir à le modifier, fabriquer des vitrages pour la vision qui ne sont pas destinés à subir des traitements thermiques ou qui doivent être bombés/trempés/recuits, fabriquer des allèges en bonne harmonie colorimétrique avec les vitrages visions, qui peuvent être laquées ou émaillées : on peut ainsi standardiser la fabrication des couches interférentielles sur des substrats de grandes dimensions, ce qui est un grand avantage sur le plan industriel.

L'invention a mis au point des vitrages de contrôle solaire trempables, avec des ΔE* en réflexion et extérieure inférieurs ou égaux à 1.2.

On peut aussi faire des allèges à couches émaillées, plutôt que laquées, ce qui est industriellement très intéressant également (l'émaillage se faisant pendant le procédé de trempe alors que le laquage nécessite une étape supplémentaire de fabrication).

**Revendications**

1. Substrat transparent en verre, muni d'un empilement de couches minces agissant sur le rayonnement solaire, l'empilement de couches étant déposé par pulvérisation magnétron, **caractérisé en ce que** ledit empilement consistant en :

   - une couche lubrifiante en dioxyde de titane d'indice optique n élevé, d'épaisseur comprise entre 5 et 50 nm,
   - une sous-couche en nitrure de silicium, associée à ladite couche lubrifiante d'indice optique élevée, d'épaisseur comprise entre 5 et 70 nm,
   - une surcouche en nitrure de silicium ou en dioxyde de silicium, d'épaisseur comprise entre 1 et 10 nm.

2. Substrat transparent selon la revendication 1, **caractérisé en ce que** ladite surcouche est en dioxyde de silicium.

3. Substrat selon l'une des revendic*ations précédentes, caractérisé en ce que* la couche lubrifiante a une épaisseur comprise entre 5 et 30 nm.

4. Substrat selon l'une des revendications précédentes, **caractérisé en ce que** l'épaisseur de la sous-couche est comprise entre 10 et 35 nm.

5. Substrat selon l'une des revendications précédentes, **caractérisé en ce que** l'épaisseur de la sur-couche est comprise entre 2 et 7 nm.

6. Substrat selon l'une des revendications précédentes, **caractérisé en ce qu'***il* est bombable/trempable et/ou émaillable.

7. Substrat selon l'une des revendications précédentes, **caractérisé en ce qu'***il* est en verre clair ou teinté dans la masse.

8. Vitrage monolithique ou double vitrage incorporant le substrat selon l'une des revendications précédentes, l'empilement de couches minces, se trouvant de préférence en face 2 et en numérotant les faces des substrats de l'extérieur vers l'intérieur de l'habitacle/du local qu'il équipe, lui conférant un effet de protection vis-à-vis du rayonnement solaire.

**9.** Vitrage selon la revendication 8, *caractérisé en ce qu'il* présente une transmission lumineuse $T_L$ de 50 à 80% ou de 60 à 70%, et un facteur solaire FS voisin de la valeur de $T_L$.

**10.** Vitrage selon la revendication 8 ou 9, *caractérisé en ce qu'il* est bleu ou vert en réflexion extérieure, côté substrat, avec notamment des valeurs de a* et b* négatives.

**11.** Substrat selon l'une des revendications 1 à 7, *caractérisé en ce qu'il* est au moins partiellement opacifié par un revêtement sous forme d'une laque ou d'un émail.

**12.** Panneau de parement de façade de type allège incorporant le substrat opacifié selon la revendication 11.

**Claims**

**1.** A transparent glass substrate, provided with a thin-film multilayer acting on solar radiation, the multilayer being deposited by magnetron sputtering, **characterized in that** said multilayer consists in:

- a lubricating film made of titanium oxide of high optical index n, having a thickness of between 5 and 50 nm,
- a silicon nitride sublayer, associated with said lubricating film of high optical index n, having a thickness of between 5 and 70 nm,
- an overlayer made of silicon nitride or silicon dioxide having a thickness of between 1 and 10 nm.

**2.** A transparent substrate according to claim 1, **characterized in that** said overlayer is made of silicon dioxide.

**3.** The substrate as claimed in one of the preceding claims, **characterized in that** the thickness of the lubricating film is between 5 and 30 nm.

**4.** The substrate as claimed in one of the preceding claims, **characterized in that** the thickness of the sublayer is between 10 and 35 nm.

**5.** The substrate as claimed in one of the preceding claims, **characterized in that** the thickness of the overlayer is between 2 and 7 nm.

**6.** The substrate as claimed in one of the preceding claims, **characterized in that** it is bendable/toughenable and/or enamelable.

**7.** The substrate as claimed in one of the preceding claims, **characterized in that** it is made of glass, whether clear or bulk-tinted, or made of a flexible or rigid, transparent polymer material.

**8.** A monolithic glazing or double glazing incorporating the substrate as claimed in one of the preceding claims, the thin-film multilayer preferably being on face 2, numbering the substrate faces from the outside toward the inside of the compartment/room which is fitted therewith, giving the glazing a solar radiation protection effect.

**9.** The glazing as claimed in claim 8, **characterized in that** it has a light transmission $T_L$ of 50 to 80%, or 60 to 75%, and a solar factor SF close to the $T_L$ value.

**10.** The glazing as claimed in claim 8 or 9, **characterized in that** it is blue or green in external reflection, on the substrate side, with, in particular, negative a* and b* values.

**11.** The substrate as claimed in one of claims 1 to 7, **characterized in that** it is at least partially opacified by a coating in the form of a lacquer or an enamel.

**12.** A wall-cladding panel, of the curtain-walling type, incorporating the opacified substrate as claimed in claim 11.

**Patentansprüche**

1. Transparentes Glassubstrat, das mit einer auf die Sonnenstrahlung wirkenden Dünnschichtstapel versehen ist, wobei die Schichtstapel durch ein Magnetron- Spritzverfahren abgeschieden wird, **dadurch gekennzeichnet, dass** die gesagte Stapel die folgenden Bauteile enthält:

   - eine Schmierschicht aus Titandioxid mit hohem optischem Index n und einer Schichtdicke zwischen 5 und 50 nm,
   - eine Unterschicht aus Siliziumnitrid, die der gesagten Schmierschicht mit hohem optischem Index zugeordnet ist, und eine Schichtdicke zwischen 5 und 70 nm aufweist,
   - eine Oberschicht aus Siliziumnitrid oder aus Siliziumdioxid, mit einer Schichtdicke zwischen 1 und 10 nm.

2. Transparentes Substrat nach Anspruch 1, **dadurch gekennzeichnet, dass** die gesagte Oberschicht aus Siliziumdioxid ist.

3. Substrat nach einem der vorgenannten Ansprüche, **dadurch gekennzeichnet, dass** die Schmierschicht eine Dicke zwischen 5 und 30 nm beträgt.

4. Substrat nach einem der vorgenannten Ansprüche, **dadurch gekennzeichnet, dass** die Dicke der Unterschicht zwischen 10 und 35 nm beträgt.

5. Substrat nach einem der vorgenannten Ansprüche, **dadurch gekennzeichnet, dass** die Dicke der Oberschicht zwischen 2 und 7 nm beträgt.

6. Substrat nach einem der vorgenannten Ansprüche, **dadurch gekennzeichnet, dass** es wölbbar/härtbar und/oder emaillierbar ist.

7. Substrat nach einem der vorgenannten Ansprüche, **dadurch gekennzeichnet, dass** es aus Klarglas oder einem einfarbigen Glas ist.

8. Monolithische Verglasung oder Doppelverglasung integrierend das Substrat nach einem der vorherigen Ansprüche, wobei die Dünnschichtstapel , die bevorzugt an der Fläche 2 sich befindet und durch die Nummerierung der Flächen Substrate vom Aussen ins Innere der damit ausgestatteten Fahrzeugkabine bzw. des damit ausgestatteten Wohnraums, dem gesagten Substrat einen Schutzeffekt gegen die Sonnenstrahlung verleiht.

9. Verglasung nach Anspruch 8, **dadurch gekennzeichnet, dass** sie eine Lichtübertragung $T_L$ von 50 bis 80% beziehungsweise von 60 bis 70%, und einen Sonnenfaktor FS nah an der Grösse $T_L$ aufweist.

10. Verglasung nach Anspruch 8 oder 9, **dadurch gekennzeichnet, dass** sie substratseitig nach aussen reflektierend blau oder grün ist, mit insbesondere negativen Grössen a* und b*.

11. Substrat gemäß einem der Ansprüche 1 bis 7, **dadurch gekennzeichnet, dass** es durch eine Verkleidung in der Form eines Lacks beziehungsweise eines Emails wenigstens teilweise undurchsichtig gemacht wird.

12. Stützmauerartige Fassadenverblendungsplatte integrierend das undurchsichtig gemachte Substrat nach Anspruch 11.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0511901 A
- EP 0678483 A
- EP 0718250 A
- EP 0536607 A
- EP 0747329 A

- FR 2736348
- WO 9641773 A
- EP 718248 A
- EP 712813 A
- EP 636588 A